# EUROPEAN PATENT APPLICATION

(11) **EP 3 896 536 A1**
(43) Date of publication of application: **20.10.2021**
(21) Application number: 20213972.1
(22) Date of filing: 15.12.2020
(51) Int. Cl.: G05B 1/08, G05B 11/12

(54) **CUTTING APPARATUS, HOLDER POSITION COORDINATE CORRECTING METHOD, AND NON-TRANSITORY COMPUTER-READABLE NON-VOLATILE STORAGE MEDIUM**

(30) Priority: 15.04.2020 JP 2020073020
(71) Applicant: DGSHAPE Corporation, Hamamatsu-shi, Shizuoka 431-2103 (JP)
(72) Inventor: SAGISAKA, Yusuke, Hamamatsu-shi, Shizuoka 431-2103 (JP); YAMAGUCHI, Makoto, Hamamatsu-shi, Shizuoka 431-2103 (JP); OKAMURA, Masaharu, Hamamatsu-shi, Shizuoka 431-2103 (JP)
(74) Representative: Grünecker Patent- und Rechtsanwälte PartG mbB

(57) **Abstract**

A cutting apparatus (100) includes: a container (10) including a holder (22) in which a workpiece (5) having an adapter (6) attached thereto is held; a reading target (3) applied to the adapter (6); an optical sensor (50) to optically read the reading target (3); a memory (112) to store a position coordinate of the holder (22), and a theoretical position coordinate of the reading target (3) associated with the position coordinate of the holder (22); a reader (114) to read the reading target (3) using the optical sensor (50) to acquire an image of the reading target (3); a calculator (116) to determine, in accordance with the image acquired by the reader (114), an actual position coordinate of the reading target (3) to calculate a correction value from a difference between the actual position coordinate and the theoretical position coordinate; and an updater (118) to update, using the correction value calculated by the calculator (116), the position coordinate of the holder (22) stored in the memory (112) .

## Description

### BACKGROUND OF THE INVENTION

### 1. Field of the Invention

The present invention relates to cutting apparatuses, holder position coordinate correcting methods, and non-transitory computer-readable non-volatile storage media.

### 2. Description of the Related Art

A cutting apparatus known in the related art machines a workpiece, which is an object to be cut, into a desired shape. Japanese Unexamined Patent Application Publication No. 2018-124862 (JP 2018-124862 A), for example, discloses a cutting apparatus including a container, a cutter, a conveyor, and a controller. The container includes holders capable of holding a plurality of workpieces having adapters attached thereto. The cutter cuts each workpiece. The conveyor grips the target adapter so as to convey the workpiece (which is to be cut) from the container to the cutter. The controller carries out conveyance and cutting of each workpiece in accordance with a machining program. The cutting apparatus is thus able to automatically cut the workpieces.

The cutting apparatus configured as described above requires assembling the holders to the container. During the assembling process, the holder(s) may be deviated from predetermined position(s), resulting in assembly error(s). If the holder(s) has/have developed assembly error(s), the conveyor may fail to get hold of the target adapter or may be caught on the holder(s) during conveyance of the workpiece (which is to be cut) by the conveyor. This may make it impossible for the conveyor to properly grip the target adapter. A known solution to this problem involves manually measuring assembly errors (e.g., the amounts of deviation from predetermined positions) with a tool (such as a clearance gauge) after assembly of the holders to the container, and entering correction values into the machining program in accordance with the measurement so as to correct the position coordinates of the holders.

Manually measuring assembly errors, however, may result in human errors depending on the skills of an operator. Correcting the position coordinate of each of the holders unfortunately complicates the correcting operation and takes a great deal of operation time and effort in measuring assembly errors and entering correction values into the machining program in accordance with the measurement.

### SUMMARY OF THE INVENTION

Preferred embodiments of the present invention provide cutting apparatuses and holder position coordinate correcting methods that are each able to automatically correct the position coordinates of holders, and also provide non-transitory computer-readable non-volatile storage media having storage thereon programs to perform the holder position coordinate correcting methods.

A preferred embodiment of the present invention provides a cutting apparatus including a container, a cutter, a conveyor, a reading target, an optical sensor, and a controller. The container includes a holder in which a workpiece having an adapter attached thereto is held. The cutter cuts the workpiece. The conveyor grips the adapter to convey the workpiece from the container to the cutter. The reading target is applied to the adapter. The optical sensor optically reads the reading target. The controller controls the cutter, the conveyor, and the optical sensor. The controller includes a memory, a reader, a calculator, an updater, and a conveyance controller. The memory stores a position coordinate of the holder, and a theoretical position coordinate of the reading target associated with the position coordinate of the holder. With the adapter held in the holder, the reader reads the reading target using the optical sensor to acquire an image of the reading target. In accordance with the image acquired by the reader, the calculator determines an actual position coordinate of the reading target to calculate a correction value from a difference between the actual position coordinate and the theoretical position coordinate. Using the correction value calculated by the calculator, the updater updates the position coordinate of the holder stored in the memory. The conveyance controller receives the updated position coordinate from the updater to control the conveyor.

Another preferred embodiment of the present invention provides a holder position coordinate correcting method for a cutting apparatus including a container, a cutter, a conveyor, a reading target, an optical sensor, and a controller. The container includes a holder in which a workpiece having an adapter attached thereto is held. The cutter cuts the workpiece. The conveyor grips the adapter to convey the workpiece from the container to the cutter. The reading target is applied to the adapter. The optical sensor optically reads the reading target. The controller controls the cutter, the conveyor, and the optical sensor. The controller includes a memory storing a position coordinate of the holder, and a theoretical position coordinate of the reading target associated with the position coordinate of the holder. The correcting method includes a first step, a second step, and a third step. The first step includes reading, with the adapter held in the holder, the reading target using the optical sensor to acquire an image of the reading target. The second step includes determining, in accordance with the image acquired in the first step, an actual position coordinate of the reading target to calculate a correction value from a difference between the actual position coordinate and the theoretical position coordinate. The third step includes updating, using the correction value calculated in the second step, the position coordinate of the holder stored in the memory.

Still another preferred embodiment of the present invention provides a non-transitory computer-readable non-volatile storage medium including a computer program stored thereon for use in controlling a cutting apparatus including a container, a cutter, a conveyor, a reading target, an optical sensor, and a controller. The container includes a holder in which a workpiece having an adapter attached thereto is held. The cutter cuts the workpiece. The conveyor grips the adapter to convey the workpiece from the container to the cutter. The reading target is applied to the adapter. The optical sensor optically reads the reading target. The controller controls the cutter, the conveyor, and the optical sensor. The controller includes a memory storing a position coordinate of the holder and a theoretical position coordinate of the reading target associated with the position coordinate of the holder. The storage medium stores a computer program to cause a computer to function as a reader, a calculator, and an updater. With the adapter held in the holder, the reader reads the reading target using the optical sensor to acquire an image of the reading target. In accordance with the image acquired by the reader, the calculator determines an actual position coordinate of the reading target to calculate a correction value from a difference between the actual position coordinate and the theoretical position coordinate. Using the correction value calculated by the calculator, the updater updates the position coordinate of the holder stored in the memory.

The preferred embodiments of the present invention enable automatic correction of the position coordinate of the holder in accordance with the difference between the actual position coordinate and theoretical position coordinate of the reading target, i.e., the "amount of deviation" from the theoretical position coordinate. This eliminates the need to manually measure an assembly error after the holder is assembled to the cutting apparatus, and thus an occurrence of a human error is able to be prevented. The preferred embodiments of the present invention increase working efficiency during assembly, and thus the position coordinate of, for example, each of a plurality of the holders, is able to be easily corrected.

Various preferred embodiments of the present invention provide cutting apparatuses and holder position coordinate correcting methods that are each able to automatically correct an assembly error of a holder, and also provide non-transitory computer-readable non-volatile storage media including computer programs to perform the methods.

### BRIEF DESCRIPTION OF THE DRAWINGS

FIG. 1 is a perspective view of a cutting apparatus according to a preferred embodiment of the present invention.
FIG. 2A is a perspective view of a workpiece having an adapter attached thereto.
FIG. 2B is a partially enlarged view of a portion of the adapter adjacent to an ID label illustrated in FIG. 2A.
FIG. 3 is a perspective view of the cutting apparatus illustrated in FIG. 1, with its door opened.
FIG. 4 is a front view of a storage and a conveyor.
FIG. 5 is a plan view of the conveyor.
FIG. 6 is a front view of the cutting apparatus.
FIG. 7 is a perspective view of a tool magazine, a rotational support, and a clamp.
FIG. 8 is a block diagram of a conveyor, a cutter, and a controller.
FIG. 9 is a flow chart illustrating a control procedure to correct an assembly error.
FIG. 10 is a chart illustrating the scanning reflectance waveform of the ID label illustrated in FIG. 2B.
FIG. 11A illustrates an example of the scanning reflectance waveform whose actual center is deviated upward from its theoretical center.
FIG. 11B illustrates an example of the scanning reflectance waveform whose actual center is deviated downward from its theoretical center.

### DETAILED DESCRIPTION OF THE PREFERRED EMBODIMENTS

Preferred embodiments of the present invention will be described below with reference to the drawings. The preferred embodiments described below are naturally not intended to limit the present invention in any way. Components or elements having the same or similar functions or operations are identified by the same reference signs, and description thereof will be simplified or omitted when deemed redundant.

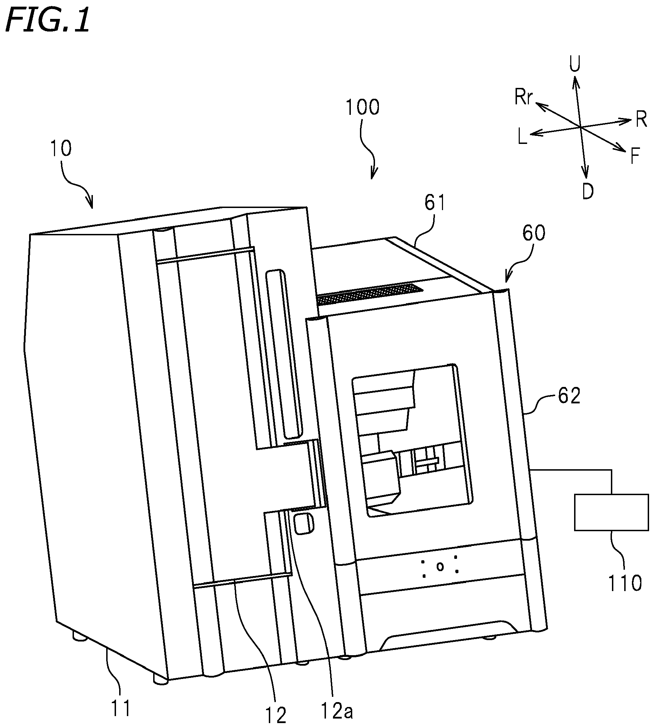

FIG. 1 is a perspective view of a cutting apparatus 100. In the following description, when a user faces the front of the cutting apparatus 100, a direction from the rear of the cutting apparatus 100 toward the user is a forward direction, and a direction from the user toward the rear of the cutting apparatus 100 is a rearward direction. The terms "right", "left", "up", and "down" respectively refer to right, left, up, and down with respect to the user facing the front of the cutting apparatus 100. The reference signs F, Rr, R, L, U, and D in the drawings respectively represent front, rear, right, left, up, and down. Assuming that an X axis, a Y axis, and a Z axis are perpendicular or substantially perpendicular to each other, the cutting apparatus 100 is provided on a plane defined by the X axis and the Y axis. In the present preferred embodiment, the X axis extends in a front-rear direction. The Y axis extends in a right-left direction. The Z axis extends in an up-down direction. The reference sign θ_{X} represents a rotational direction around the X axis. The reference sign θ_{Y} represents a rotational direction around the Y axis. The reference sign θ_{Z} represents a rotational direction around the Z axis. These directions are defined merely for the sake of convenience of description and do not limit in any way how the cutting apparatus 100 may be installed.

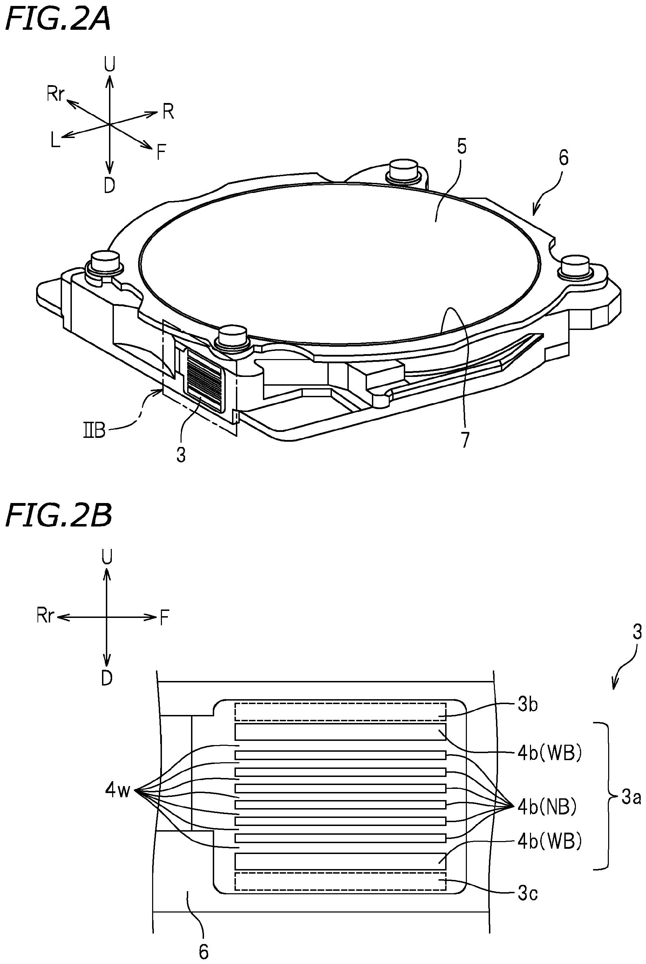

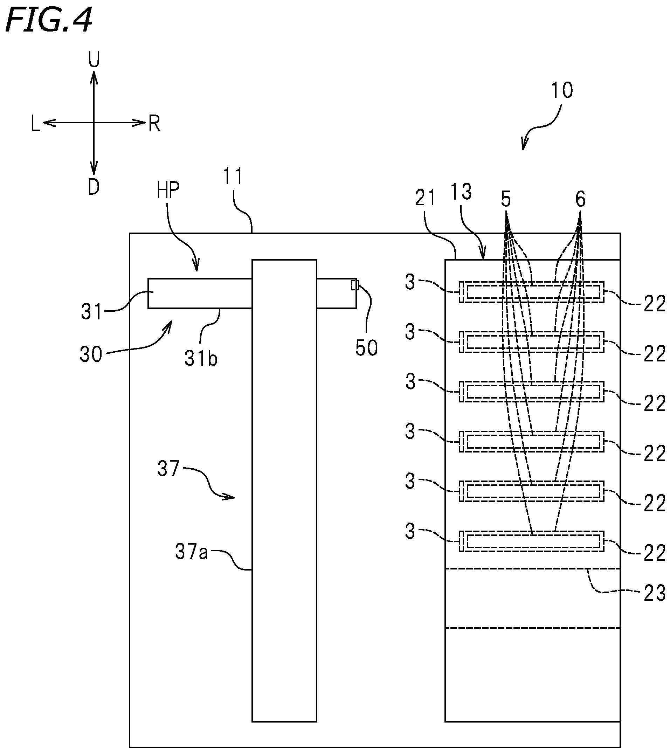

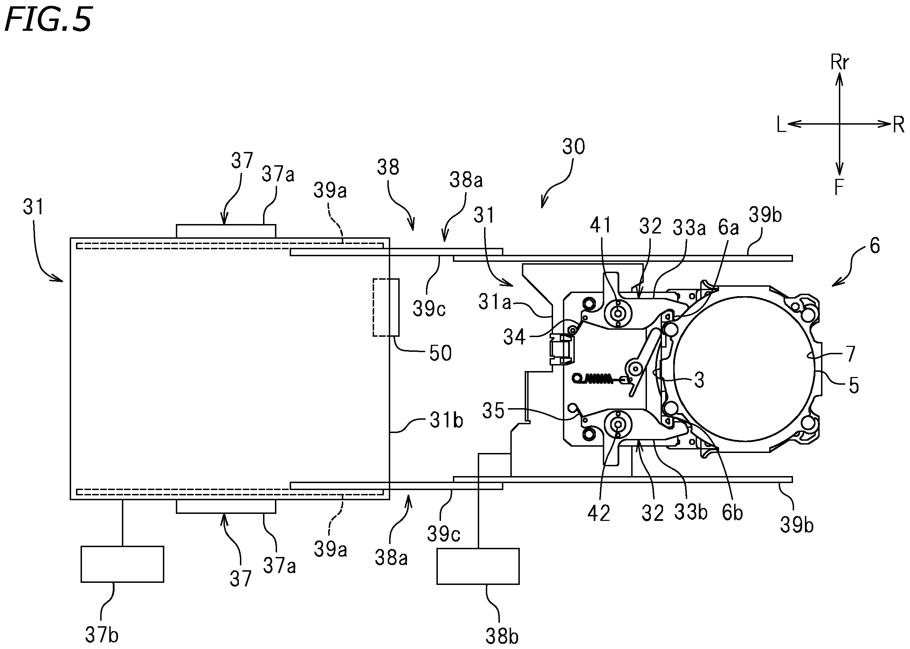

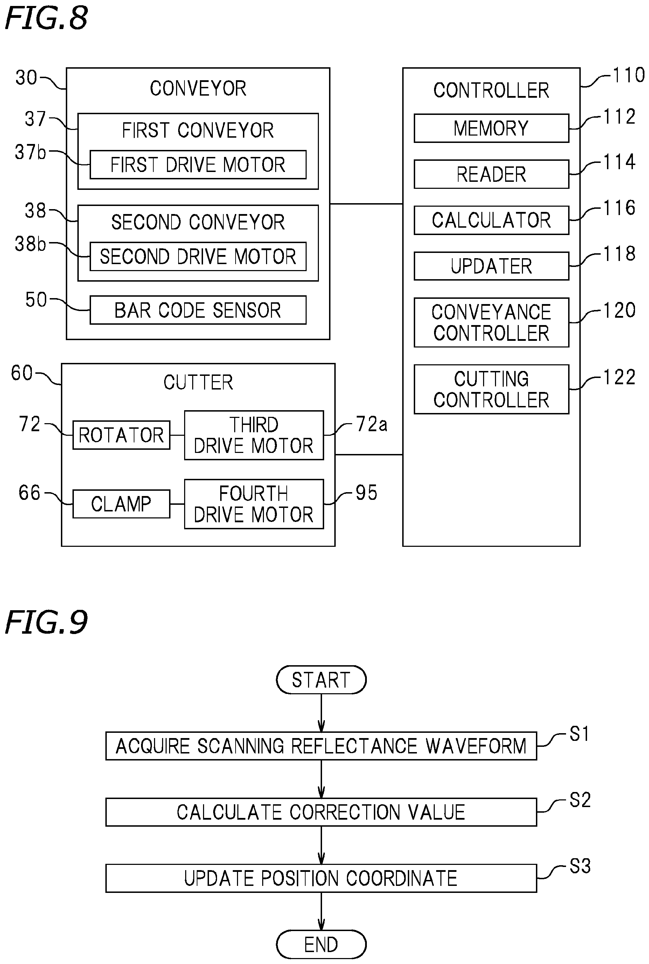

The cutting apparatus 100 machines a workpiece 5 (see FIG. 2A) to fabricate a dental product. Examples of the dental product to be fabricated by the cutting apparatus 100 include: dental prosthetics, for example, a crown, a bridge, a coping, an inlay, an onlay, a veneer, and a custom abutment; an artificial tooth; and a denture base. The cutting apparatus 100 is able to automatically machine a plurality of the workpieces 5. Although described in more detail below, the cutting apparatus 100 includes a container 10, a conveyor 30 (see FIGS. 4 and 5), a cutter 60, and a controller 110 (see also FIG. 8) as illustrated in FIG. 1.

FIG. 2A is a perspective view of the workpiece 5 having an adapter 6 attached thereto. The workpiece 5 is an example of a workpiece to be cut by the cutting apparatus 100. Material(s) for the workpiece 5 is/are not limited to any particular material(s). Examples of material(s) for the workpiece 5 include: resin materials, for example, polymethyl methacrylate (PMMA) resin, polyether ether ketone (PEEK) resin, hybrid resin, and glass-reinforced resin; ceramic materials, for example, glass ceramic and zirconia; metallic materials, for example, cobalt-chrome sintered metal; wax; and gypsum. When zirconia is selected as a material for the workpiece 5, semi-sintered zirconia is preferably used, for example. In the present preferred embodiment, the workpiece 5 has a circular plate shape (e.g., a disk shape). The workpiece 5, however, may have any other suitable shape. The workpiece 5 may have, for example, a block shape (for example, a cubic or cuboid shape).

The adapter 6 is a retainer to retain the workpiece 5. The adapter 6 is to be gripped by an adapter gripper 32 (see FIG. 5) of the conveyor 30 (which will be described below). An insertion hole 7 is defined in a central portion of the adapter 6. The workpiece 5 is inserted into the insertion hole 7 of the adapter 6 and secured to the adapter 6. The workpiece 5 having the adapter 6 attached thereto is provided in the container 10, conveyed from the container 10 to the cutter 60 by the conveyor 30, and then cut by the cutter 60.

FIG. 2B is a partially enlarged view of FIG. 2A. As illustrated in FIGS. 2A and 2B, an ID label 3 is affixed to the left surface of the adapter 6 with a sticker. The ID label 3 has shades of color and is thus optically readable by a bar code sensor 50 (see FIG. 5). The bar code sensor 50 will be described below. The ID label 3 is an example of a reading target. In this preferred embodiment, the reading target is expressed in two tones of black and white. In this preferred embodiment, the reading target is an optical symbol. The term "optical symbol" is a general term for information media that store identification information by combinations of high optical reflectance portions and low optical reflectance portions. The term "optical symbol" subsumes a one-dimensional symbol that presents information elements provided in a line, and a two-dimensional symbol that presents information elements provided two-dimensionally in a horizontal direction and a vertical direction. The ID label 3 illustrated in FIG. 2B is a one-dimensional symbol bar code. The ID label 3 may be, for example, a two-dimensional code, for example, a QR code (registered trademark), a data matrix, or a data tag. The reading target may be directly formed (or directly marked) on the surface of the adapter 6 by, for example, engraving or etching.

The ID label 3 has line symmetry with respect to the up-down direction. The ID label 3 includes: a bar code symbol 3a; a quiet zone (or margin) 3b located above the bar code symbol 3a; and a quiet zone (or margin) 3c located below the bar code symbol 3a. The bar code symbol 3a has line symmetry with respect to the up-down direction. In this preferred embodiment, the bar code symbol 3a includes: a plurality of rectangular or substantially rectangular black bars 4b extending in the front-rear direction; and a plurality of rectangular or substantially rectangular white bars 4w extending in the front-rear direction. The black bars 4b and the white bars 4w alternate in the up-down direction and are in parallel or substantially in parallel with each other. Each of the black bars 4b is a portion with a low optical reflectance. Each of the white bars 4w is a portion with a high optical reflectance. The black bars 4b include: a pair of wide bars WB; and a plurality of narrow bars NB located between the wide bars WB and smaller in width than the wide bars WB in the up-down direction. In this preferred embodiment, the number of narrow bars NB is six, for example. The locations and number of the black bars 4b in FIG. 2B are illustrated by way of example only. The locations of the black bars 4b are not limited to any particular locations. The number of black bars 4b is not limited to any particular number. The locations and number of the white bars 4w in FIG. 2B are illustrated by way of example only. The locations of the white bars 4w are not limited to any particular locations. The number of white bars 4w is not limited to any particular number. The ID label 3 may be asymmetrical with respect to the up-down direction.

The ID label 3 includes an identifier (ID) by which the adapter 6 having the ID label 3 affixed thereto is identified and distinguished from other adapters. The identifier is not limited to any particular expression. The identifier is expressed using, for example, an identification number, an identification character, or an identification symbol. The ID label 3 may be used to distinguish the workpiece 5 from other workpieces to manage the usage of the workpiece 5. The reading target may be any type of reading target that is readable by the bar code sensor 50. The reading target may be, for example, a mark, a symbol, an alphabet, or a number that includes no identifier. The reading target may be symmetric with respect to a predetermined direction. In one example, the reading target may be an alphabet (for example, E, H, I, O, or X) or a number (for example, 0 or 8) that is symmetric with respect to the up-down direction.

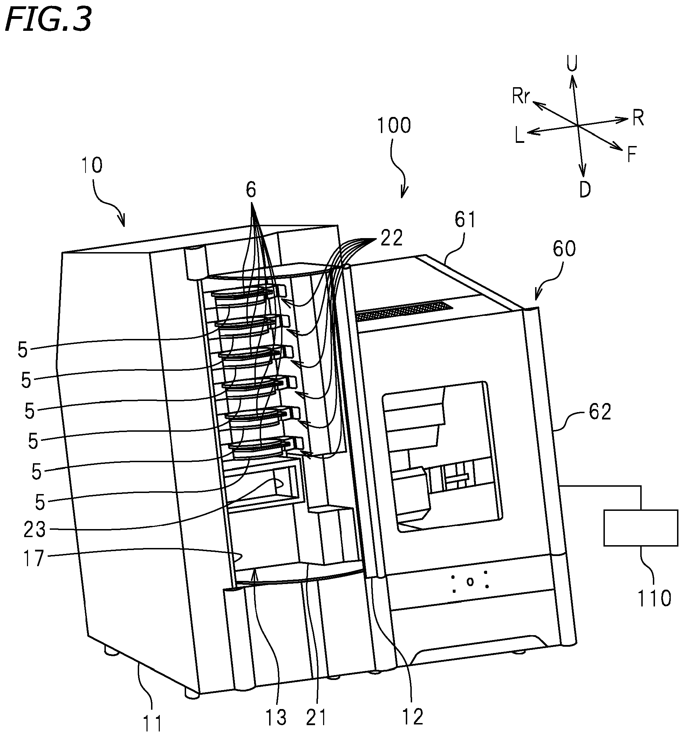

The container 10 includes the workpiece 5 to which the adapter 6 is attached. FIG. 3 illustrates the cutting apparatus 100, with its door 12 opened. As illustrated in FIG. 3, the container 10 is able to include a plurality of the workpieces 5. In this preferred embodiment, the container 10 includes a container case body 11, the door 12, and a storage 13.

The container case body 11 has a box shape. An internal space is defined in the container case body 11. The storage 13 is located in the internal space of the container case body 11. An opening 17 is defined in the front portion of the container case body 11. Through the opening 17, the internal space of the container case body 11 is in communication with the external space. The door 12 is able to open and close the opening 17 defined in the front portion of the container case body 11. As illustrated in FIG. 1, the door 12 is supported by the container case body 11, and the door 12 is rotatable around its right end 12a.

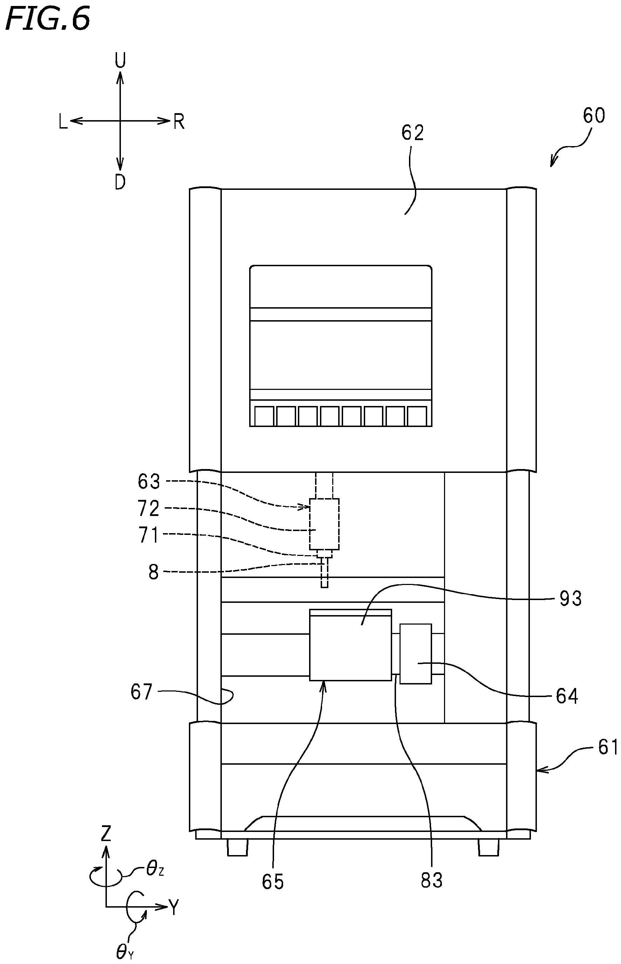

The storage 13 is attached to an inner wall of the door 12. The storage 13 includes a storage body 21 and a plurality of holders 22 provided on the storage body 21. The storage body 21 has a box shape extending in the up-down direction. A conveyance hole 23 is defined in a wall surface of the storage body 21. Through the conveyance hole 23, the internal space of the container case body 11 is in communication with an internal space defined in a cutter case body 61 (see FIG. 6) of the cutter 60 (which will be described below). The holders 22 are provided in a line in the up-down direction. An internal space is defined in each of the holders 22. The workpieces 5 having the adapters 6 attached thereto are each held in an associated one of the holders 22. In this preferred embodiment, the storage 13 includes six holders 22, for example. The storage 13 is able to store the workpieces 5 whose number is equal to the number of holders 22 (i.e., six workpieces 5 in this preferred embodiment), with the adapters 6 attached to the workpieces 5. The locations and number of the holders 22 in FIG. 3 are illustrated by way of example only. The locations of the holders 22 are not limited to any particular locations. The number of holders 22 is not limited to any particular number.

FIG. 4 is a front view of the storage 13 and the conveyor 30. In this preferred embodiment, the ID labels 3 (see FIG. 2A) including different identifiers are each affixed to an associated one of the adapters 6. In this preferred embodiment, the ID labels 3 affixed to the adapters 6 are located at the corresponding positions in the front-rear direction and the right-and-left direction and provided in a line in the up-down direction. Instead of the ID labels 3, similar marks, symbols, alphabets, or numbers, for example, may be assigned to the adapters 6.

The conveyor 30 selects one of the workpieces 5 stored in the storage 13 and conveys the selected workpiece 5 to the cutter 60. The conveyor 30 is an "auto disk changer" (i.e., an automatic workpiece changer) that is able to automatically change the workpieces 5. The conveyor 30 removes, from the storage 13, the workpiece 5 held in the associated holder 22 of the storage 13 and convey the workpiece 5 to the cutter 60. The conveyor 30 removes the workpiece 5 from the cutter 60 and convey the workpiece 5 to the storage 13, and the workpiece 5 is held in the associated holder 22 of the storage 13.

FIG. 5 is a plan view of the conveyor 30. FIG. 5 illustrates the conveyor 30 gripping the workpiece 5. As illustrated in FIG. 5, the conveyor 30 includes a conveyor body 31, the adapter gripper 32, a first conveyor 37, a second conveyor 38, and the bar code sensor 50.

As illustrated in FIG. 4, the conveyor body 31 is located in the internal space of the container case body 11. As illustrated in FIG. 5, the conveyor body 31 includes a first conveyor sub-body 31a having a plate shape and a second conveyor sub-body 31b having a box shape. The first conveyor sub-body 31a is movable in the right-left direction. The first conveyor sub-body 31a is provided with a first shaft 41 extending upward and a second shaft 42 extending upward. The first and second shafts 41 and 42 face each other in the front-rear direction. The second conveyor sub-body 31b is able to include the first conveyor sub-body 31a. The bar code sensor 50 is attached to the second conveyor sub-body 31b. The second conveyor sub-body 31b is an example of a support to support the bar code sensor 50.

The adapter gripper 32 grips the adapter 6 and the workpiece 5 attached to the adapter 6. As illustrated in FIG. 5, the adapter gripper 32 includes a first hook 33a, a second hook 33b, a first spring 34, and a second spring 35. The first and second hooks 33a and 33b catch the adapter 6 therebetween in the front-rear direction to grip the adapter 6. The first and second hooks 33a and 33b face each other in the front-rear direction. The first hook 33a is supported by the first shaft 41 and rotatable around the first shaft 41. An end of the first hook 33a comes into engagement with a first engagement protrusion 6a of the adapter 6. The second hook 33b is supported by the second shaft 42 and rotatable around the second shaft 42. An end of the second hook 33b comes into engagement with a second engagement protrusion 6b of the adapter 6.

The first spring 34 applies an elastic force to the first hook 33a. The first spring 34 applies the elastic force in a direction in which the end of the first hook 33a (i.e., the right end of the first hook 33a in FIG. 5) moves toward the second hook 33b. The second spring 35 applies an elastic force to the second hook 33b. The second spring 35 applies the elastic force in a direction in which the end of the second hook 33b (i.e., the right end of the second hook 33b in FIG. 5) moves toward the first hook 33a. In this preferred embodiment, the first and second hooks 33a and 33b grip the adapter 6 with the elastic forces of the first and second springs 34 and 35. The mechanism just described is illustrated by way of example only. The adapter gripper 32 is not limited to any particular configuration or structure. The adapter gripper 32 may grip the adapter 6 by, for example, electric control.

The first conveyor 37 conveys the conveyor body 31 and the adapter gripper 32 in the up-down direction. The up-down direction is an example of a conveyance direction. The first conveyor 37 is an example of a conveyor to convey the bar code sensor 50 in the up-down direction. As illustrated in FIG. 4, the first conveyor 37 is located inside the container case body 11 of the container 10. As illustrated in FIG. 5, the first conveyor 37 includes a pair of first rails 37a and a first drive motor 37b. The first rails 37a face each other in the front-rear direction. The first rails 37a extend in the up-down direction. As illustrated in FIG. 4, the first rails 37a face the storage 13 of the container 10 in the right-left direction.

The conveyor body 31 is slidable along the first rails 37a. The conveyor body 31 is provided between the first rails 37a. The first drive motor 37b is a motor to move the conveyor body 31 and the adapter gripper 32 in the up-down direction. In this preferred embodiment, the first drive motor 37b is connected to the conveyor body 31. The first drive motor 37b moves the conveyor body 31 in the up-down direction along the first rails 37a to move the adapter gripper 32 in the up-down direction. The mechanism just described is illustrated by way of example only. The first conveyor 37 is not limited to any particular configuration or structure. The first conveyor 37 may be a "ball screw mechanism".

The second conveyor 38 conveys the first conveyor sub-body 31a and the adapter gripper 32 in the right-left direction. The second conveyor 38 conveys the workpiece 5 (which has the adapter 6 attached thereto) to the cutter 60 through the conveyance hole 23 (see FIG. 4) defined in the storage body 21. As illustrated in FIG. 5, the second conveyor 38 includes a pair of second rails 38a and a second drive motor 38b. The second rails 38a are telescopic rails extendible and retractable in the right-left direction. The second rails 38a face each other in the front-rear direction. In this preferred embodiment, the second rails 38a each include a fixed rail 39a, a movable rail 39b, and an intermediate rail 39c.

As illustrated in FIG. 5, each fixed rail 39a is fixed to the second conveyor sub-body 31b. Each movable rail 39b is provided on the first conveyor sub-body 31a. Each intermediate rail 39c connects the associated fixed rail 39a with the associated movable rail 39b. Each intermediate rail 39c is located between the associated fixed rail 39a and the associated movable rail 39b. Each intermediate rail 39c is slidable relative to the associated fixed rail 39a and the associated movable rail 39b. The mechanism just described is illustrated by way of example only. The second conveyor 38 is not limited to any particular configuration or structure.

The second drive motor 38b is a motor to move the first conveyor sub-body 31a of the conveyor body 31 and the adapter gripper 32 in the right-left direction. In this preferred embodiment, the second drive motor 38b is connected to the first conveyor sub-body 31a. Alternatively, the second drive motor 38b may be connected to either one of the second rails 38a. In this preferred embodiment, driving the second drive motor 38b changes the interval between each fixed rail 39a and the associated movable rail 39b. For example, an increase in the interval between each fixed rail 39a and the associated movable rail 39b conveys the first conveyor sub-body 31a (which is provided with the movable rails 39b) and the workpiece 5 (which is gripped by the adapter gripper 32) to the cutter 60 through the conveyance hole 23 (see FIG. 4). A decrease in the interval between each fixed rail 39a and the associated movable rail 39b causes each fixed rail 39a to overlap with the associated movable rail 39b in the front-rear direction. This eventually results in a state where the first conveyor sub-body 31a and the adapter gripper 32 are included in the second conveyor sub-body 31b.

The bar code sensor 50 optically reads the ID labels 3 affixed to the adapters 6. In this preferred embodiment, the bar code sensor 50 further reads (or decodes) identifiers stored in the ID labels 3. The bar code sensor 50 is an example of an optical sensor. As illustrated in FIG. 4, the bar code sensor 50 faces the target ID label 3, with the adapters 6 or the workpieces 5 (which have the adapters 6 attached thereto) stored in the storage 13.

In this preferred embodiment, the bar code sensor 50 is provided on the second conveyor sub-body 31b of the conveyor body 31. The bar code sensor 50 moves in the up-down direction in accordance with the movement of the conveyor body 31 along the first rails 37a. The bar code sensor 50 reads each ID label 3 in a direction perpendicular or substantially perpendicular to the direction of movement of the conveyor body 31 (i.e., the up-down direction). Alternatively, the bar code sensor 50 may be provided, for example, on the first conveyor sub-body 31a. The bar code sensor 50 may be immovably fixed to an inner wall surface of the container case body 11. The bar code sensor 50 may be directly fixed to the inner wall surface of the container case body 11 or may be indirectly fixed to the inner wall surface of the container case body 11 through a different component (e.g., a connector).

In this preferred embodiment, the bar code sensor 50 moves along each ID label 3 to trace one of the quiet zones (e.g., the quiet zone 3b located above the bar code symbol 3a), the bar code symbol 3a, and the other one of the quiet zones (e.g., the quiet zone 3c located below the bar code symbol 3a) in this order. In this preferred embodiment, the adapters 6 are held in the holders 22 of the storage 13, and the bar code sensor 50 moves across the ID labels 3. Thus, with a single downward or upward movement of the bar code sensor 50, the bar code sensor 50 is able to continuously and collectively read the ID labels 3 (which are affixed to the adapters 6). Accordingly, the bar code sensor 50 is able to collectively read the identifiers (which are stored in the ID labels 3).

In this preferred embodiment, the bar code sensor 50 is a non-contact sensor. The bar code sensor 50 scans the ID labels 3 in an imaging mode, for example, to read images of the ID labels 3. As used herein, the term "image" refers to all types of images that directly or indirectly depict the ID labels 3. The term "image" encompasses captured images reflective of the ID labels 3 on an as-is basis, and captured waveforms corresponding to the ID labels 3. Examples of the captured waveforms include analog waveforms, for example, scanning reflectance waveforms (which will be described below), and digital waveforms. The bar code sensor 50 is, for example, a charge-coupled device (CCD) camera. The bar code sensor 50 may read code waveforms by laser-scanning the ID labels 3. The bar code sensor 50 may be a contact sensor.

The cutter 60 cuts each workpiece 5. As illustrated in FIG. 1, the cutter 60 is integral with the container 10 in this preferred embodiment. A portion of the cutter 60 is in communication with the container 10. The cutter 60 is not limited to any particular configuration or structure.

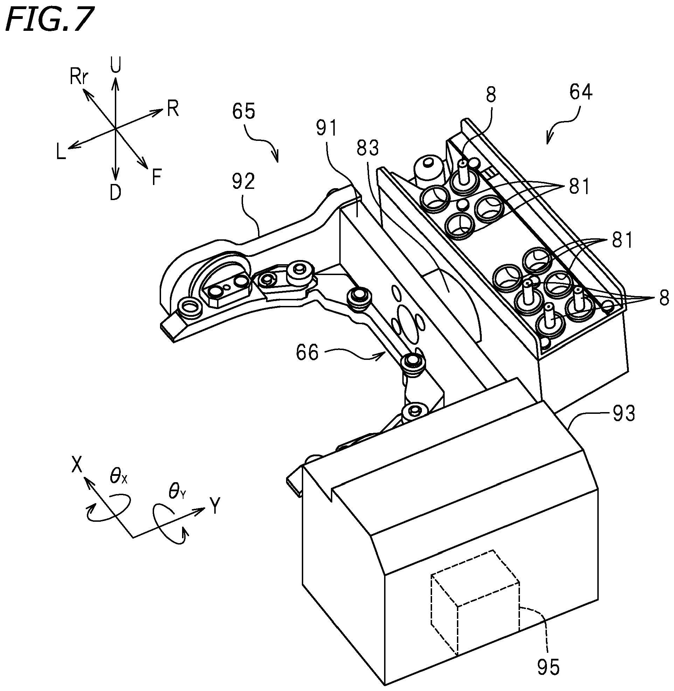

FIG. 6 is a front view of the cutter 60. As illustrated in FIG. 6, the cutter 60 includes a cutter case body 61, a cover 62, a spindle 63, a tool magazine 64 (see also FIG. 7), a rotational support 65 (see also FIG. 7), and a clamp 66 (see FIG. 7). FIG. 6 illustrates the cutter 60, with the cover 62 opened. The cutter case body 61 has a box shape. An internal space is defined in the cutter case body 61. An opening 67 is defined in the front portion of the cutter case body 61. The cover 62 is able to open and close the opening 67. In this preferred embodiment, the cover 62 is supported by the cutter case body 61, and the cover 62 is slidable upward and downward.

The spindle 63 supports a machining tool 8, and the machining tool 8 is rotatable. The machining tool 8 may also be referred to as a milling bar. The spindle 63 machines the workpiece 5 by bringing the machining tool 8 into contact with the workpiece 5 while rotating the machining tool 8. The machining tool 8 may be a tool to cut the workpiece 5 or a tool to grind the workpiece 5. The spindle 63 includes a tool gripper 71 and a tool rotator 72. The tool gripper 71 is able to grip the upper end of the machining tool 8. The tool gripper 71 is, for example, a collet chuck.

The tool rotator 72 rotates the machining tool 8 gripped by the tool gripper 71. The tool rotator 72 is provided on the upper end of the tool gripper 71. The tool rotator 72 extends in the up-down direction. The tool rotator 72 is connected with a third drive motor 72a (see FIG. 8). Driving the third drive motor 72a causes the tool rotator 72 to rotate in the rotational direction θ_{Z} around the Z axis. The rotation of the tool rotator 72 rotates the machining tool 8 (which is gripped by the tool gripper 71) in the rotational direction θ_{Z} around the Z axis. The tool rotator 72 is movable in the right-left direction and the up-down direction by a first driver (not illustrated).

FIG. 7 is a perspective view of the tool magazine 64, the rotational support 65, and the clamp 66. The tool magazine 64 holds a plurality of the machining tools 8. The tool magazine 64 has a box shape. The upper surface of the tool magazine 64 is provided with a plurality of holes 81 in which the machining tools 8 are to be held. Each machining tool 8 is inserted into an associated one of the holes 81, and the upper portion of each machining tool 8 is exposed. Replacement of the machining tool 8 includes: returning the machining tool 8 (which is gripped by the tool gripper 71) to the associated hole 81; moving the tool gripper 71 and the tool rotator 72 to a position over the machining tool 8 to be used next; and causing the tool gripper 71 to grip the upper end of the machining tool 8 located under the tool gripper 71.

The tool magazine 64 is provided with a rotation shaft 83. The rotation shaft 83 supports the rotational support 65, and the rotational support 65 is rotatable. The rotation shaft 83 extends in the right-left direction. The rotation shaft 83 is coupled to the rotational support 65. The tool magazine 64 is provided with a second driver (not illustrated). The second driver rotates the rotation shaft 83 in the rotational direction θ_{Y} around the Y axis. The rotation of the rotation shaft 83 in the rotational direction θ_{Y} around the Y axis rotates the rotational support 65 in the rotational direction θ_{Y} around the Y axis.

The rotational support 65 supports the clamp 66, and the clamp 66 is rotatable. The rotational support 65 is substantially U-shaped in a plan view. The rotational support 65 is coupled to the rotation shaft 83. The rotational support 65 includes a first portion 91, a second portion 92, and a third portion 93. The first portion 91 extends in the front-rear direction. The second portion 92 extends leftward from the rear end of the first portion 91. The third portion 93 extends leftward from the front end of the first portion 91. The clamp 66 is rotatably supported by the second portion 92 and the third portion 93. The third portion 93 is provided with a fourth drive motor 95 to rotate the clamp 66 in the rotational direction θ_{X} around the X axis.

The clamp 66 retains the adapter 6, and the adapter 6 is detachable from the clamp 66. The clamp 66 retains the workpiece 5 while the workpiece 5 is being cut. The clamp 66 conforms in shape to a portion of the adapter 6. The clamp 66 is substantially C-shaped in the plan view. In this preferred embodiment, the workpiece 5 having the adapter 6 attached thereto is cut while being retained by the clamp 66.

The controller 110 controls conveyance and cutting of the workpieces 5. The controller 110 is not limited to any particular configuration. The controller 110 is, for example, a microcomputer. The hardware of the microcomputer is not limited to any particular configuration. The microcomputer includes, for example, an interface (I/F), a central processing unit (CPU), a read-only memory (ROM), a random-access memory (RAM), and a storage medium (for example, a memory). The I/F receives, for example, a machining program (e.g., a NC program) from an external device, for example, a host computer. The CPU executes a command included in the machining program. The ROM stores the program to be executed by the CPU. The RAM is used as a working area where the program is to be expanded. The storage medium stores the program and various data. In this preferred embodiment, the controller 110 preferably is located outside the cutting apparatus 100 and is communicably connected to the cutting apparatus 100. The connection between the controller 110 and the cutting apparatus 100 may be a wired connection or a wireless connection. Alternatively, the controller 110 may be provided inside the cutting apparatus 100 (e.g., inside the container case body 11 or inside the cutter case body 61).

FIG. 8 is a block diagram of the conveyor 30, the cutter 60, and the controller 110. As illustrated in FIG. 8, the controller 110 is communicably connected to the components of the conveyor 30, for example, the first drive motor 37b of the first conveyor 37, the second drive motor 38b of the second conveyor 38, and the bar code sensor 50. The controller 110 is thus able to control the components of the conveyor 30. The controller 110 is communicably connected to the components of the cutter 60, for example, the third drive motor 72a and the fourth drive motor 95. The controller 110 is thus able to control the components of the cutter 60.

The controller 110 includes a memory 112, a reader 114, a calculator 116, an updater 118, a conveyance controller 120, and a cutting controller 122. The functions and operations of the components of the controller 110 may be implemented by hardware or may be implemented by software. A computer may read a computer program to implement the functions and operations of the components of the controller 110. A single processor or a plurality of processors may execute a computer program stored in the controller 110 to implement the functions and operations of the components of the controller 110. The functions and operations of the components of the controller 110 may be incorporated into a circuit that implements functions and operations similar to those of program(s) to be executed by the components of the controller 110.

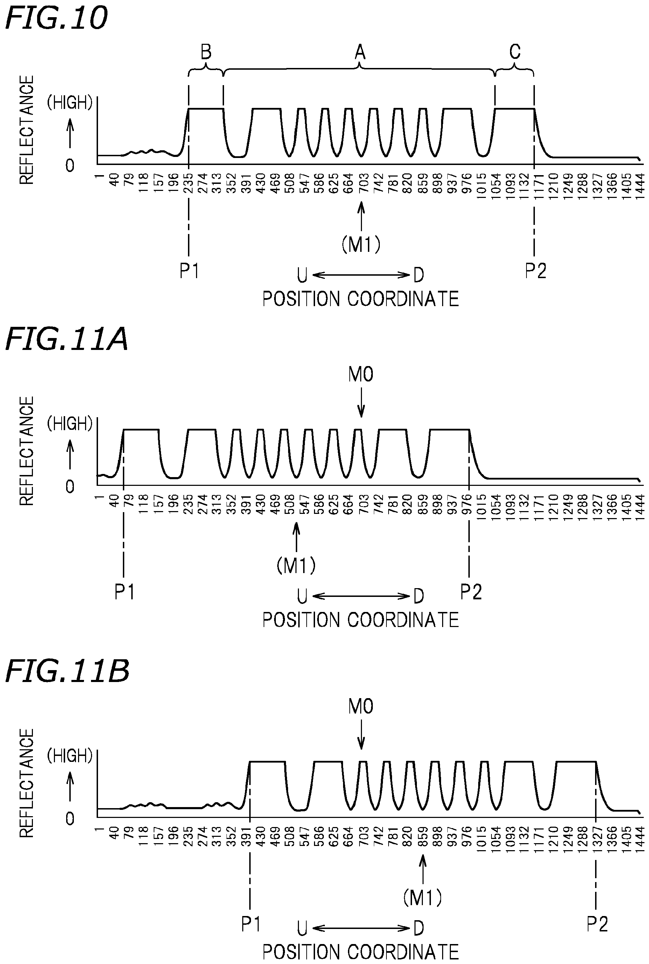

The memory 112 stores setting information for the cutting apparatus 100 to convey and cut the workpieces 5. The setting information is read by a machining program. The setting information includes theoretical position coordinates of the holders 22. In other words, the setting information includes position coordinates of the holders 22 measured when the holders 22 are properly assembled to predetermined positions (i.e., when there is no assembly error). In this preferred embodiment, the memory 112 further stores, in advance, at least one theoretical position coordinate of each ID label 3 (which may simply be referred to as a "theoretical position coordinate") corresponding to the theoretical position coordinate of the associated holder 22. In this preferred embodiment, the memory 112 stores the theoretical position coordinates in the up-down direction. In one example, the memory 112 stores, in advance, a theoretical central position coordinate of each ID label 3 in the up-down direction. The theoretical central position coordinate of each ID label 3 in the up-down direction may hereinafter be also referred to as a "theoretical center M0" (see FIG. 11A). The theoretical center M0 of each ID label 3 is correlated with the theoretical position coordinate of the associated holder 22.

The reader 114 defines and functions as a controller to control the bar code sensor 50 to optically read the ID label 3 of each adapter 6 and acquire an image of each ID label 3. In this preferred embodiment, the reader 114 also defines and functions as a controller to read the ID labels 3 (which have been optically read by the bar code sensor 50) to determine information on the identifiers stored in the ID labels 3. In this preferred embodiment, the reader 114 is able to control the first conveyor 37 to collectively read the ID labels 3 of the adapters 6 (which are held in the holders 22 of the storage 13) .

Specifically, the reader 114 controls the first drive motor 37b, and the conveyor body 31 moves along the first rails 37a. The bar code sensor 50 provided on the conveyor body 31 thus moves in the up-down direction. The up-down direction is an example of a scanning direction. During the up-down movement, the bar code sensor 50 sequentially passes through regions adjacent to the holders 22 (or more specifically, regions leftward of the holders 22) and thus moves along the ID labels 3. Accordingly, the bar code sensor 50 is able to continuously scan the ID labels 3 to collectively acquire images (e.g., captured waveforms) of the ID labels 3.

The calculator 116 is a controller to calculate a correction value to correct the position coordinate of the target holder 22 in accordance with the image (e.g., the captured waveform) acquired by the reader 114. The calculator 116 first determines, from the image acquired by the reader 114, an actual position coordinate of the target ID label 3 associated with the theoretical position coordinate of the target ID label 3. The actual position coordinate of the target ID label 3 associated with the theoretical position coordinate of the target ID label 3 may hereinafter be simply referred to as an "actual position coordinate". In one example, the calculator 116 determines an actual central position coordinate of the target ID label 3 in the up-down direction, which is associated with the theoretical center M0. The actual central position coordinate of the target ID label 3 in the up-down direction, which is associated with the theoretical center M0, may hereinafter be also referred to as an "actual center M1" (see FIG. 10). The calculator 116 then calculates the amount of deviation in accordance with a difference between the actual position coordinate and the theoretical position coordinate stored in advance in the memory 112. In one example, the calculator 116 calculates the amount of deviation in accordance with a difference between the actual center M1 and the theoretical center M0 stored in advance in the memory 112. The "amount of deviation" will be used as the correction value. The correction value may be stored in the memory 112.

The updater 118 is a controller to update the theoretical position coordinate of the target holder 22 (which is stored in the memory 112) using the correction value calculated by the calculator 116. The updater 118 updates the position coordinate of the target holder 22 (which is stored in the memory 112), and the theoretical position coordinate of the target ID label 3 corresponds to the actual position coordinate of the target ID label 3. In one example, the updater 118 updates the position coordinate of the target holder 22, and the theoretical center M0 corresponds to the actual center M1. The position coordinate of the target holder 22, which has been updated, is read by the machining program during cutting of the target workpiece 5.

The conveyance controller 120 is a controller to control the conveyor 30. In accordance with the position coordinate of the target holder 22 updated by the updater 118, the conveyance controller 120 causes the adapter gripper 32 of the conveyor 30 to be attached to or detached from the target adapter 6 (or causes the adapter gripper 32 of the conveyor 30 to grip or release the target adapter 6). In accordance with the position coordinate of the target holder 22 updated by the updater 118, the conveyance controller 120 controls driving of the first drive motor 37b to control the movement of the conveyor body 31 and the adapter gripper 32 in the up-down direction. The conveyance controller 120 controls driving of the second drive motor 38b to control the movement of the conveyor body 31 and the adapter gripper 32 in the right-left direction.

The cutting controller 122 is a controller to control the cutter 60. The cutting controller 122 controls driving of the third drive motor 72a to control the rotation of the tool rotator 72 of the spindle 63. The cutting controller 122 controls driving of the fourth drive motor 95 to control the rotation of the clamp 66 in the rotational direction θ_{X} around the X axis. The cutting controller 122 controls the second driver, and the rotation shaft 83 rotates in the rotational direction θ_{Y} around the Y axis.

FIG. 9 is a flow chart illustrating a control procedure to correct an assembly error. As illustrated in FIG. 9, the present preferred embodiment includes performing the steps of: acquiring a scanning reflectance waveform (step S1); calculating a correction value (step S2); and updating a position coordinate (step S3). Steps S1, S2, and S3 are performed in this order. Step S1 is an example of a first step. Step S2 is an example of a second step. Step S3 is an example of a third step. The control procedure may include any other process at any step. Prior to this control procedure, one or a plurality of the adapters 6 is/are held in the holder(s) 22 of the storage 13. At this point, the workpiece(s) 5 may or may not be attached to the adapter(s) 6. The theoretical center M0 is stored in advance in the memory 112.

Step S1 includes performing a scanning reflectance waveform acquisition process. The reader 114 is configured or programmed to perform the acquisition process of step S1. With at least the adapter(s) 6 held in the holder(s) 22, the reader 114 controls the first drive motor 37b to move the conveyor body 31 and the bar code sensor 50 in the up-down direction. For example, when the conveyor body 31 and the bar code sensor 50 are located at a home position HP in FIG. 4, the reader 114 controls the first drive motor 37b to move the conveyor body 31 and the bar code sensor 50 downward. The reader 114 controls the bar code sensor 50 to optically read one or a plurality of the ID labels 3 affixed to the adapters 6. The reader 114 thus acquires one or more scanning reflectance waveforms. The number of scanning reflectance waveforms acquired by the reader 114 is preferably equal to the number of adapters 6 and the number of ID labels 3, for example.

The holders 22 include a first holder 22, a second holder 22, and a third holder 22. FIG. 10 is a chart illustrating the scanning reflectance waveform of the ID label 3 affixed to the adapter 6 held in the first holder 22. In FIG. 10, the vertical axis represents reflectance, and the horizontal axis represents position coordinates in the up-down direction. Each position coordinate in FIG. 10 identifies a distance by which the bar code sensor 50 has moved downward with respect to a reference position (0) that corresponds to the home position HP in FIG. 4. The higher the reflectance, the closer to white the color is. The lower the reflectance (i.e., the closer to 0 the reflectance is), the closer to black the color is. The scanning reflectance waveform illustrated in FIG. 10 includes: a waveform portion B associated with the quiet zone 3b; a waveform portion A associated with the bar code symbol 3a; and a waveform portion C associated with the quiet zone 3c. The scanning reflectance waveform acquired by the reader 114 may be stored in the memory 112.

Step S2 includes performing a correction value calculation process. The calculator 116 is configured or programmed to perform the calculation process of step S2. The calculator 116 first calculates, for the scanning reflectance waveform acquired by the reader 114, the actual center M1 of the target ID label 3 in the up-down direction. As illustrated in FIG. 10, for example, the actual center M1 is calculable by the following expression: (P1 + P2)/2, where P1 represents the upper end position of the waveform portion B associated with the quiet zone 3b, and P2 represents the lower end position of the waveform portion C associated with the quiet zone 3c. When the reader 114 has acquired a plurality of scanning reflectance waveforms, the calculator 116 calculates the actual center M1 for each of the scanning reflectance waveforms. The actual center M1 may be stored in the memory 112.

The calculator 116 then calculates a correction value from a difference between the actual center M1 calculated and the theoretical center M0 stored in advance in the memory 112. In this preferred embodiment, the correction value is expressed as the amount of deviation from the theoretical center M0 in the up-down direction. In one example, the amount of upward deviation from the theoretical center M0 is expressed using a plus sign and an absolute value, and the amount of downward deviation from the theoretical center M0 is expressed using a minus sign and an absolute value.

FIG. 11A is a chart illustrating the scanning reflectance waveform of the ID label 3 affixed to the adapter 6 held in the second holder 22. FIG. 11B is a chart illustrating the scanning reflectance waveform of the ID label 3 affixed to the adapter 6 held in the third holder 22. The theoretical center M0 stored in advance in the memory 112 is also illustrated in each of FIGS. 11A and 11B. In the example illustrated in FIG. 11A, the actual center M1 is deviated upward from the theoretical center M0. In this case, the correction value is expressed using a plus sign and an absolute value corresponding to the amount of deviation. In the example illustrated in FIG. 11B, the actual center M1 is deviated downward from the theoretical center M0. In this case, the correction value is expressed using a minus sign and an absolute value corresponding to the amount of deviation.

Step S3 includes performing a position coordinate updating process. The updater 118 is configured or programmed to perform the updating process of step S3. The updater 118 rewrites the theoretical position coordinate of the target holder 22 stored in the memory 112, and the amount of deviation in the up-down direction is cancelled. In the example illustrated in FIG. 11A, the updater 118 moves the theoretical position coordinate of the second holder 22 upward by the amount of deviation to update the position coordinate of the second holder 22. In the example illustrated in FIG. 11B, the updater 118 moves the theoretical position coordinate of the third holder 22 downward by the amount of deviation to update the position coordinate of the third holder 22. Consequently, the cutting apparatus 100 corrects an assembly error of the target holder 22.

After the assembly error correcting process has been finished and the workpiece(s) 5 has/have been attached to the adapter(s) 6 held in the holder(s) 22 of the storage 13, the user transmits the machining program (which is to be executed) to the cutting apparatus 100. Upon receiving the machining program, the cutting apparatus 100 starts the process of cutting the workpiece(s) 5. The controller 110 performs the process of cutting the workpiece(s) 5 in accordance with the machining program. The conveyance controller 120 controls the conveyor 30. The cutting controller 122 controls the cutter 60.

Specifically, the conveyance controller 120 controls the first conveyor 37 to move the bar code sensor 50 downward, and controls the bar code sensor 50 to optically read the ID labels 3 and read the identifiers stored in the ID labels 3. The conveyance controller 120 thus identifies the workpiece(s) 5 selected by the machining program from among the workpieces 5 held in the holders 22. The conveyance controller 120 controls the adapter gripper 32, and the adapter gripper 32 grips the target adapter 6 in accordance with the updated position coordinate of the associated holder 22. In accordance with the updated position coordinate of the holder 22, the conveyance controller 120 controls the first and second conveyors 37 and 38 to convey the target workpiece 5 (which has been selected by the machining program) to the cutter 60. The cutting controller 122 controls the spindle 63 and the clamp 66 to cut the target workpiece 5 retained by the clamp 66.

As described above, the present preferred embodiment includes reading the ID labels 3 (which are affixed to the adapters 6) with the bar code sensor 50, and using, as the correction value, the amount of deviation from the theoretical center M0 to automatically correct assembly error(s) of the holder(s) 22. Accordingly, assembly errors do not need to be manually measured after the holders 22 are assembled to the cutting apparatus 100. Accordingly, the present preferred embodiment is able to prevent occurrence of human errors and significantly increase working efficiency during assembly. When the storage 13 is provided with a plurality of the holders 22, for example, the cutting apparatus 100 according to the present preferred embodiment is able to easily correct an assembly error of each of the holders 22. The cutting apparatus 100 according to the present preferred embodiment is also able to easily correct the position coordinate(s) of the holder(s) 22 when component(s) of the container 10 is/are replaced or when backlash has occurred in the holder(s) 22 owing to movement or age deterioration of the cutting apparatus 100, for example.

In the present preferred embodiment, the reader 114 scans the target ID label 3 (i.e., the reading target) in the up-down direction (i.e., the scanning direction) to acquire a captured waveform of the target ID label 3 in the up-down direction. Thus, the load on the controller 110 is smaller and the time to acquire of an image (i.e., a captured waveform) corresponding to the target ID label 3 is shorter than when a captured image of the target ID label 3, for example, is used.

In the present preferred embodiment, the memory 112 stores the central position coordinate of the target ID label 3 (i.e., the reading target) in the up-down direction (i.e., the scanning direction). The central position coordinate stored in the memory 112 is a theoretical position coordinate. The calculator 116 determines, from the captured waveform acquired by the reader 114, an actual central position coordinate in the up-down direction to calculate a correction value from a difference between the actual central position coordinate and the central position coordinate stored in the memory 112. The central position coordinate is calculated using the position coordinates of at least two points. Thus, the accuracy of correction value calculation is relatively higher than when the position coordinate of only one point (e.g., the upper end position P1 or the lower end position P2 in FIG. 10) is used.

In the present preferred embodiment, the bar code sensor 50 (i.e., the optical sensor) is attached to the conveyor 30. By providing the bar code sensor 50 on the conveyor 30, the bar code sensor 50 is able to be moved. Accordingly, a plurality of the ID labels 3 are able to be accurately read by the single bar code sensor 50. When the bar code sensor 50 is integral with the conveyor 30, the number of components is reduced, resulting in a reduction in manufacturing cost.

The cutting apparatus 100 according to the present preferred embodiment further includes: the second conveyor sub-body 31b (i.e., the support) supporting the bar code sensor 50 (i.e., the optical sensor); and the first conveyor 37 (i.e., the conveyor) to convey the second conveyor sub-body 31b in the up-down direction (i.e., the conveyance direction). The container 10 includes a plurality of the holders 22 provided in the up-down direction. Accordingly, a plurality of the ID labels 3 are able to be efficiently read by the single bar code sensor 50. Accordingly, the cutting apparatus 100 is able to acquire images of the ID labels 3 in a short time.

In the present preferred embodiment, each ID label 3 (i.e., the reading target) has line symmetry with respect to the up-down direction (i.e., the conveyance direction). The actual central position coordinate is thus likely to be stable, and a correction value is able to be accurately calculated.

In the present preferred embodiment, each ID label 3 (i.e., the reading target) is expressed in two tones of black and white. The contrast between the two tones in each ID label 3 is high, and thus the reader 114 is able to acquire clear images. Accordingly, the actual central position coordinate is likely to be stable, and a correction value is able to be accurately calculated.

In the present preferred embodiment, each ID label 3 (i.e., the reading target) is an optical symbol including an identifier of the associated adapter 6. By providing the optical symbol, an additional reading target to correct the position coordinate of each holder 22 does not need to be included. By including an optical symbol also for position coordinate correction, the cutting apparatus 100 is able to be provided with a simplified structure, resulting in a reduction in manufacturing cost.

The techniques described herein provide a computer program configured or programmed to cause a computer to implement the controller 110 of the cutting apparatus 100. The computer program is a program for causing a computer to implement at least the reader 114, the calculator 116, and the updater 118.

The computer program may be stored in, for example, a non-volatile memory. In other words, the techniques described herein provide a computer-readable non-volatile memory storing the program. Examples of a non-volatile memory include: semiconductor memories, for example, a ROM and a memory card; optical memories, for example, a digital versatile disc (DVD), a magneto-optical (MO) disc, a minidisc (MD), a compact disc (CD), and a Blu-ray disc (BD); and magnetic memories, for example, a magnetic tape and a flexible disk. The computer program may be transmitted to a cloud server through any of the memories described above or a network (for example, the Internet).

Although the preferred embodiments of the present invention have been described thus far, the foregoing preferred embodiments are only illustrative, and the present invention may be embodied in various other implementations. Preferred embodiments of the present invention may be practiced based on the description in this specification and technical common knowledge in the related field. The techniques described in the claims include various changes and modifications made to the preferred embodiment illustrated above. Any or some of the technical features of the foregoing preferred embodiments, for example, may be replaced with any or some of the technical features of modified preferred embodiments described below. Any or some of the technical features of the modified preferred embodiments described below may be added to the technical features of the foregoing preferred embodiments. Unless described as being essential, the technical features may be optional.

In one example of the above preferred embodiments, the holders 22 are provided in a line in the up-down direction. The present invention, however, is not limited to this example. In another example, the holders 22 may be provided in a line in the right-left direction. In this case, the first rails 37a of the first conveyor 37 may extend in the right-left direction. In still another example, the holders 22 may be provided in a line in an oblique direction inclined relative to a vertical direction by a predetermined angle θ. In this case, the first rails 37a of the first conveyor 37 may extend in the oblique direction inclined relative to the vertical direction by the predetermined angle θ.

In one example of the above preferred embodiments, the first conveyor 37 conveys the conveyor body 31 and the adapter gripper 32 in the up-down direction, the memory 112 stores theoretical position coordinate(s) in the up-down direction, and the calculator 116 determines actual position coordinate(s) in the up-down direction. The present invention, however, is not limited to this example. The first conveyor 37 may convey the conveyor body 31 and the adapter gripper 32 in the front-rear direction and/or the right-left direction. In this case, the memory 112 may store the theoretical position coordinate(s) of the ID label(s) 3 in the front-rear direction and/or the right-left direction instead of or in addition to the theoretical position coordinate(s) of the ID label(s) 3 in the up-down direction. The calculator 116 may determine the actual position coordinate(s) of the ID label (s) 3 in the front-rear direction and/or the right-left direction instead of or in addition to the actual position coordinate(s) of the ID label(s) 3 in the up-down direction.

In one example of the above preferred embodiments, the memory 112 stores the theoretical center M0 correlated with the theoretical position coordinate of the target holder 22, and the calculator 116 calculates the actual center M1 from the image acquired by the reader 114. The present invention, however, is not limited to this example. In another example, the memory 112 may store, in advance, the position coordinate(s) of theoretical upper end position and/or lower end position of the target ID label 3 in the up-down direction, which is/are associated with the theoretical position coordinate of the target holder 22. In this case, the calculator 116 may calculate, from the image acquired by the reader 114, a correction value using only the position coordinate(s) of the upper end position P1 and/or the lower end position P2.

In one example of the above preferred embodiments, the controller 110 may further include a determiner to determine whether the amount of deviation calculated by the calculator 116 is equal to or greater than a predetermined threshold value. In this case, the control procedure illustrated in FIG. 9 may include updating the position coordinate of the target holder 22 in the updating process of step S3 when the amount of deviation calculated in step S2 is equal to or greater than the predetermined threshold value. The control procedure may skip the step of updating the position coordinate of the target holder 22 when the amount of deviation calculated in step S2 is smaller than the predetermined threshold value. In other words, when the actual center M1 substantially corresponds to the theoretical center M0, the control procedure may skip the step of updating the position coordinate of the target holder 22 (i.e., the updating process of step S3).

## Claims

1. A cutting apparatus comprising:
a container (10) including a holder (22) in which a workpiece (5) including an adapter (6) attached thereto is held;
a cutter (60) to cut the workpiece (5);
a conveyor (30) to grip the adapter (6) to convey the workpiece (5) from the container (10) to the cutter (60);
a reading target (3) applied to the adapter (6);
an optical sensor (50) to optically read the reading target (3); and
a controller (110) to control the cutter (60), the conveyor (30), and the optical sensor (50), wherein
the controller (110) includes:
a memory (112) to store a position coordinate of the holder (22), and a theoretical position coordinate of the reading target (3) associated with the position coordinate of the holder (22);
a reader (114) to read, with the adapter (6) held in the holder (22), the reading target (3) using the optical sensor (50) to acquire an image of the reading target (3);
a calculator (116) to determine, in accordance with the image acquired by the reader (114), an actual position coordinate of the reading target (3) to calculate a correction value from a difference between the actual position coordinate and the theoretical position coordinate;
an updater (118) to update, using the correction value calculated by the calculator (116), the position coordinate of the holder (22) stored in the memory (112); and
a conveyance controller (120) to receive the updated position coordinate from the updater (118) to control the conveyor (30).

2. The cutting apparatus according to claim 1, wherein
the reader (114) scans the reading target (3) in a predetermined scanning direction to acquire a captured waveform of the reading target (3) in the scanning direction.

3. The cutting apparatus according to claim 2, wherein
the memory (112) stores a central position coordinate (M0) of the reading target (3) in the scanning direction, the central position coordinate (M0) being the theoretical position coordinate, and
the calculator (116) determines, from the captured waveform acquired by the reader (114), an actual central position coordinate (M1) in the scanning direction to calculate the correction value from a difference between the actual central position coordinate (M1) and the central position coordinate (M0) stored in the memory (112).

4. The cutting apparatus according to any one of claims 1 to 3, wherein
the optical sensor (50) is attached to the conveyor (30) .

5. The cutting apparatus according to any one of claims 1 to 4, further comprising:
a support (31b) to support the optical sensor (50); and
a conveyor (37) to convey the support (31b) in a predetermined conveyance direction, wherein
the container (10) includes a plurality of the holders (22) provided in the conveyance direction.

6. The cutting apparatus according to claim 5, wherein
the reading target (3) has line symmetry with respect to the conveyance direction.

7. The cutting apparatus according to any one of claims 1 to 6, wherein
the reading target (3) is expressed in two tones of black and white.

8. The cutting apparatus according to any one of claims 1 to 7, wherein
the reading target (3) is an optical symbol including an identifier of the adapter (6).

9. A holder position coordinate correcting method for a cutting apparatus (100) including:
a container (10) including a holder (22) in which a workpiece (5) having an adapter (6) attached thereto is held;
a cutter (60) to cut the workpiece (5);
a conveyor (30) to grip the adapter (6) to convey the workpiece (5) from the container (10) to the cutter (60);
a reading target (3) applied to the adapter (6);
an optical sensor (50) to optically read the reading target (3); and
a controller (110) to control the cutter (60), the conveyor (30), and the optical sensor (50), the controller (110) including a memory (112) to store a position coordinate of the holder (22) and a theoretical position coordinate of the reading target (3) associated with the position coordinate of the holder (22), wherein
the correcting method comprises:
reading (S1), with the adapter (6) held in the holder (22), the reading target (3) using the optical sensor (50) to acquire an image of the reading target (3);
determining (S2), in accordance with the image acquired in the reading step (S1), an actual position coordinate of the reading target (3) to calculate a correction value from a difference between the actual position coordinate and the theoretical position coordinate; and
updating(S3), using the correction value calculated in the determining step (S2), the position coordinate of the holder (22) stored in the memory (112).

10. A non-transitory computer-readable non-volatile storage medium for a cutting apparatus (100) including:
a container (10) including a holder (22) in which a workpiece (5) having an adapter (6) attached thereto is held;
a cutter (60) to cut the workpiece (5);
a conveyor (30) to grip the adapter (6) to convey the workpiece (5) from the container (10) to the cutter (60);
a reading target (3) applied to the adapter (6);
an optical sensor (50) to optically read the reading target (3); and
a controller (110) to control the cutter (60), the conveyor (30), and the optical sensor (50), the controller (110) including a memory (112) to store a position coordinate of the holder (22) and a theoretical position coordinate of the reading target (3) associated with the position coordinate of the holder (22), wherein
the storage medium stores a computer program for causing a computer to function as:
a reader (114) to read, with the adapter (6) held in the holder (22), the reading target (3) using the optical sensor (50) to acquire an image of the reading target (3);
a calculator (116) to acquire, in accordance with the image acquired by the reader (114), an actual position coordinate of the reading target (3) to calculate a correction value from a difference between the actual position coordinate and the theoretical position coordinate; and
an updater (118) to update, using the correction value calculated by the calculator (116), the position coordinate of the holder (22) stored in the memory (112).
